# EUROPEAN PATENT APPLICATION

(11) **EP 1 739 543 A1**
(43) Date of publication of application: **03.01.2007**
(21) Application number: 05720277.2
(22) Date of filing: 08.03.2005
(51) Int. Cl.: G06F 3/14, G06F 12/12, G09G 5/00

(54) **SCREEN TRANSITION CONTROL DEVICE**

(30) Priority: 05.04.2004 JP 2004110782
(71) Applicant: MATSUSHITA ELECTRIC INDUSTRIAL CO., LTD., Osaka 571-8501 (JP)
(72) Inventor: YAJIMA, Hideaki Matsushita Electric Indus. Co.Ltd,, Chuo-ku Osaka-shi, Osaka 540-6319 (JP); SHIN, Hidehiko Matsushita Electric Indus. Co.Ltd,, Chuo-ku Osaka-shi, Osaka 540-6319 (JP)
(74) Representative: Gassner, Wolfgang
(86) International application number: PCT/JP2005/004005
(87) International publication number: WO 2005/098587

(57) **Abstract**

A history information storage unit (104) stores screen history information while a display data storage unit (105) stores display data for displaying a screen. Moreover, a screen transition control unit (103) controls the screen transition. Even when screen display data is discarded, a screen transition control device (102) holds a history of the screen by storing the screen state of the screen, whose display data is discarded, as a discard state in the history information storage unit (104).

## Description

### TECHNICAL FIELD

The present invention relates to screen transition control devices and screen transition control methods, and more particularly to a screen transition control device and a screen transition control method for switching between screen displays in accordance with an external request.

### BACKGROUND ART

Conventionally, there is a device known as the screen transition control device, which, as described in Patent Document 1, manages a history of screens in a tree structure and, when returning to (redisplaying) a screen recorded in the history, deletes from the history records concerning screens between a screen that is being displayed and the screen that is to be returned to.

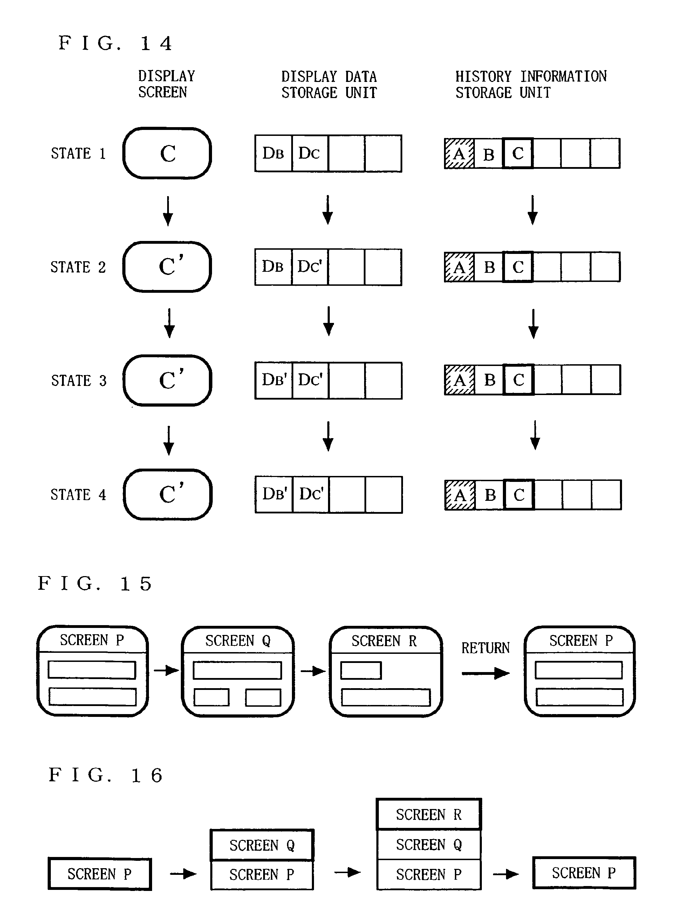

FIG. 15 is a diagram illustrating how a screen displayed on a display device transitions. In FIG. 15, the screen transitions take place in the order screen P, screen Q, screen R, screen P. The first screen P and the last screen P are the same screen. If an operation to return to screen P is performed when screen R is being displayed, the screen that is being displayed is changed from screen R to screen P.

FIG. 16 is a diagram illustrating how a history changes in accordance with the screen transition shown in FIG. 15. In FIG. 16, bold-line rectangles represent that a screen is currently being displayed on the display device, and thin-line rectangles represent that a screen has been previously displayed on the display device. When changing of screens takes place in the order screen P, screen Q, screen R, as shown in FIG. 15, a record concerning the screen P, a record concerning the screen Q and a record concerning the screen R are sequentially added to a history as shown in FIG. 16. Thereafter, when the screen that is being displayed is changed back from the screen R to the screen P, the records concerning the screens Q and R are deleted from the history. In addition, as for a screen that is determined to be unnecessary, the conventional screen transition control device deletes a record concerning the screen from the history, and discards display data concerning the screen. This reduces the amount of memory for storing the history and display data.
[Patent Document 1] Japanese Laid-Open Patent Publication No. 2002-108932

### DISCLOSURE OF THE INVENTION

### PROBLEMS TO BE SOLVED BY THE INVENTION

In the conventional screen transition control device, however, a process for deleting a record concerning a screen from the history and a process for discarding display data concerning the screen are simultaneously performed upon the occurrence of an event (e.g., switching between screen displays). Therefore, display data concerning the screen that is recorded in the history is not discarded. However, cell phones and hand-held information terminals each have a small memory capacity in the entire apparatus, and therefore memory that can be used for storing display data is limited. Accordingly, in the case of apparatuses, such as cell phones and information terminals, which have a small memory capacity, the number of screens that can be recorded in a history is, after all, equal to the number of screens for which display data can be stored, which is extremely small.

Also, in recent years, cell phones and hand-held information terminals have become capable of downloading screens through the Internet and making replacement of a background screen and the like. In addition, in order to deal with globalization, it has become necessary to change in real-time system language settings of the cell phones and the hand-held information terminals.

In the conventional screen transition control device, however, when display data concerning a screen is discarded from memory in accordance with replacement of a background screen or a change of language settings, a record concerning the screen in a history is also discarded.

Therefore, an object of the present invention is to provide a screen transition control device and a screen transition control method capable of faster screen transition without limiting, by display data, the number of screens that can be recorded in a history, while maintaining the history even when the display data is discarded.

### SOLUTION TO THE PROBLEMS

A first aspect of the present invention is directed to a screen transition control device for switching between screens that are to be displayed on an externally provided display device in accordance with an external request, including: a display data storage unit for storing display data concerning a plurality of screens; a history information storage unit for storing, as history information, information concerning a screen having been displayed before; and a screen transition control unit for outputting display data concerning one or more screens to the display device and managing the history information, the one or more screens being selected from among the display data stored in the display data storage unit, the history information including information associated with a previously displayed screen whose display data is currently not stored in the display data storage unit.

In this case, the history information preferably includes first information indicating whether display data concerning the screen having been displayed before is stored in the display data storage unit and second information indicating whether the screen is currently being displayed on the display device.

In addition, when a data area for writing display data concerning a transition target screen is absent in the display data storage unit at the time of screen transition, the screen transition control unit preferably discards display data concerning a single screen from the display data storage unit.

In addition, when display data concerning a screen recorded in the history information as having been previously displayed is discarded, the screen transition control unit preferably updates the first information included in information concerning the screen without deleting the information concerning the screen from the history information.

In addition, the screen transition control device may further include a screen generation state management unit for, when there is a screen that is recorded in the history information as having been displayed after a screen corresponding to a predetermined number counted from a newest screen has been displayed and whose display data is not stored in the display data storage unit, writing the display data concerning the screen to the display data storage unit.

In addition, the screen transition control device may further include a screen generation state management unit for, when there is a screen that is recorded in the history information as having been displayed before a screen corresponding to a predetermined number counted from a newest screen has been displayed and whose display data is stored in the display data storage unit, discarding display data concerning the screen from the display data storage unit.

In addition, the screen transition control device may further include a screen state monitoring unit for, when the first information or the second information disagrees with a state of the screen having been displayed before, causing the first information or the second information to agree with the state of the screen.

In addition, the screen transition control unit, when externally requested for screen replacement, preferably updates the display data stored in the display data storage unit while holding the history information.

A second aspect of the present invention is directed to a screen transition control method for switching between screens that are to be displayed on an externally provided display device in accordance with an external request, including: a display data storing step for storing display data concerning a plurality of screens; a history information storing step for storing, as history information, information concerning a screen having been displayed before; and a screen transition control step for outputting display data concerning one or more screens to the display device and managing the history information, the one or more screens being selected from among the display data stored in the display data storing step, the history information including information associated with a previously displayed screen whose display data is currently not stored.

A third aspect of the present invention is directed to a program for executing in a computer the screen transition control method based on the second aspect of the present invention.

A fourth aspect of the present invention is directed to a storage medium having stored therein a program for executing in a computer the screen transition control method based on the second aspect of the present invention.

### BRIEF DESCRIPTION OF THE DRAWINGS

[FIG. 1] FIG. 1 is a block diagram illustrating a screen transition control device according to a first embodiment of the present invention.
[FIG. 2] FIG. 2 is a table illustrating screen states stored in a history information storage unit included in screen transition control devices according to the first through third embodiments of the present invention.
[FIG. 3] FIG. 3 is a table illustrating exemplary screen history information stored in the history information storage unit included in the screen transition control devices according to the first through third embodiments of the present invention.
[FIG. 4] FIG. 4 is a flow chart illustrating the procedure for a screen transition process performed by a screen transition control unit included in the screen transition control device according to the first embodiment of the present invention.
[FIG. 5] FIG. 5 is a flow chart illustrating the procedure for the screen transition process performed by the screen transition control unit included in the screen transition control device according to the first embodiment of the present invention.
[FIG. 6] FIG. 6 is a flow chart illustrating the procedure for a free space securing process performed by the screen transition control unit included in the screen transition control device according to the first embodiment of the present invention.
[FIG. 7] FIG. 7 is a flow chart illustrating the procedure for a display data discarding process performed by the screen transition control unit included in the screen transition control device according to the first embodiment of the present invention.
[FIG. 8] FIG. 8 is a diagram illustrating an exemplary screen transition process performed by the screen transition control unit included in the screen transition control device according to the first embodiment of the present invention.
[FIG. 9] FIG. 9 is a diagram illustrating an exemplary screen transition process performed by the screen transition control unit included in the screen transition control device according to the first embodiment of the present invention.
[FIG. 10] FIG. 10 is a block diagram illustrating a screen transition control device according to the second embodiment of the present invention.
[FIG. 11] FIG. 11 is a flow chart illustrating the procedure for a screen generation state management process performed by a screen generation state management unit included in the screen transition control device according to the second embodiment of the present invention.
[FIG. 12] FIG. 12 is a diagram illustrating an exemplary screen generation state management process performed by the screen generation state management unit included in the screen transition control device according to the second embodiment of the present invention.
[FIG. 13] FIG. 13 is a flow chart illustrating the procedure for a screen replacement process performed by a screen transition control unit included in the screen transition control device according to the third embodiment of the present invention.
[FIG. 14] FIG. 14 is a diagram illustrating an exemplary screen replacement process performed by the screen transition control unit included in the screen transition control device according to the third embodiment of the present invention.
[FIG. 15] FIG. 15 is a diagram illustrating screen transition in a conventional screen transition control device.
[FIG. 16] FIG. 16 is a diagram illustrating a change of a screen history in accordance with the screen transition shown in FIG. 15.

### DESCRIPTION OF THE REFERENCE CHARACTERS

101, 1001 application
102, 1002 screen transition control device
103, 1003 screen transition control unit
104, 1004 history information storage unit
105, 1005 display data storage unit
106, 1006 display device
1007 screen generation state management unit
1008 screen state monitoring unit

### BEST MODE FOR CARRYING OUT THE INVENTION

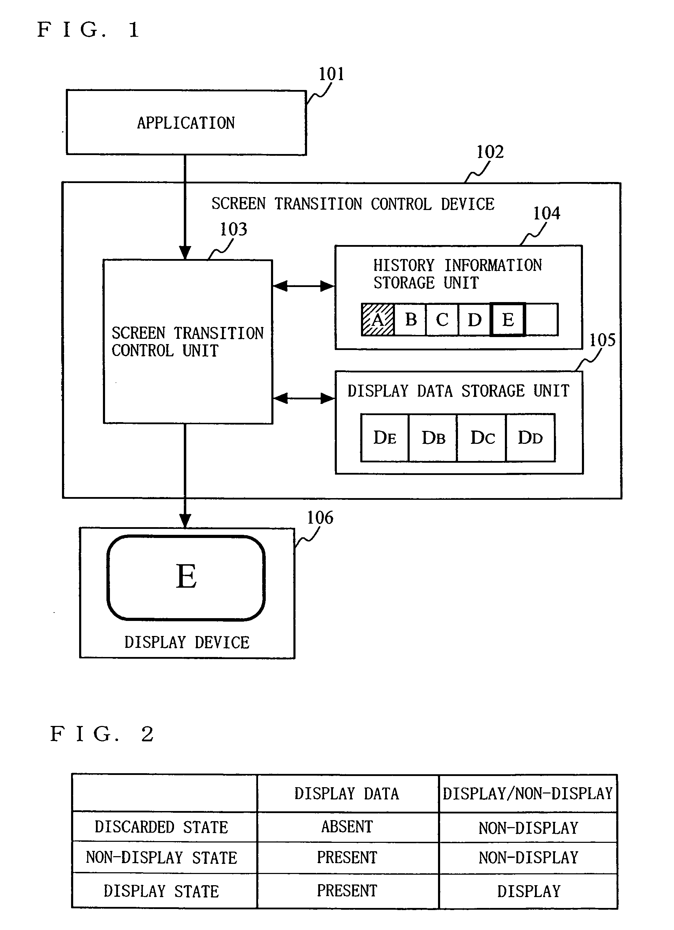

Hereinafter, embodiments of the present invention will be described with reference to the drawings. FIG. 1 is a block diagram illustrating a configuration of a screen transition control device according to a first embodiment of the present invention. The screen transition control device 102 according to the present embodiment includes a screen transition control unit 103, a history information storage unit 104 and a display data storage unit 105.

The history information storage unit 104 stores history information concerning a screen that is currently being displayed and screens that have been previously displayed (hereinafter, referred to as the "screen history information"). The display data storage unit 105 stores display data (bitmap data) concerning the screen that is currently being displayed and the screens that have been previously displayed.

The screen transition control unit 103 reads display data from the display data storage unit 105 in accordance with a screen transition request from an application 101, and outputs the read display data to a display device 106. At this time, if the requested screen display data is not present in the display data storage unit 105, the screen transition control unit 103 writes the requested screen display data to the display data storage unit 105, and outputs the written display data to the display device 106. The display device 106 displays a screen based on the display data.

Next, the screen history information, which is stored in the history information storage unit 104, is described in detail. The screen history information is composed of one or more pieces of "screen state information". The screen state information is information concerning a single screen, which includes a "screen identifier" for identifying the screen and a "screen state" indicating the state of the screen.

The screen state is any of three kinds of states shown in FIG. 2. Hereinbelow, a state where display data is present in the display data storage unit 105 and a screen is being displayed is referred to as the "display state", a state where display data is present in the display data storage unit 105 but no screen is being displayed is referred to as the "non-display state", and a state where display data is not present in the display data storage unit 105 is referred to as the "discarded state".

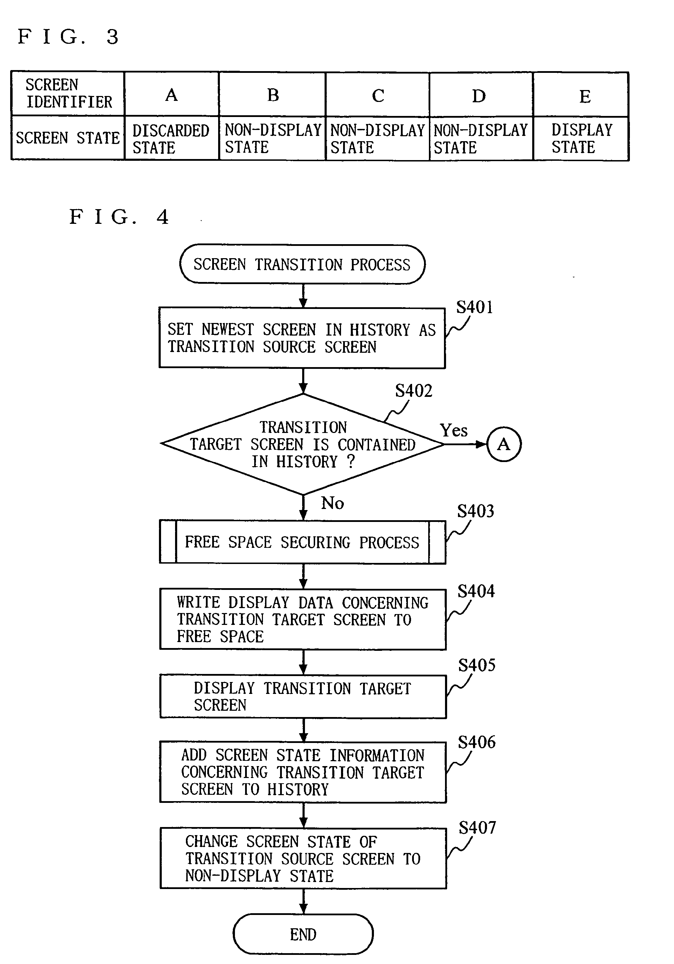

FIG. 3 is a table illustrating exemplary screen history information. The screen history information shown in FIG. 3 is composed of five pieces of screen state information. These pieces of screen state information include five screen identifiers and five screen states. For example, the screen state of a screen having screen identifier A (hereinafter, referred to as the "screen A"; the same is applied to other screens) is a discarded state, the screen states of screens B, C and D are non-display states and the screen state of screen E is a display state.

An example of the screen history information shown in FIG. 3 is schematically illustrated within the history information storage unit 104 in FIG. 1. Each square within the history information storage unit 104 indicates screen state information concerning a single screen. The leftmost square indicates screen state information concerning the oldest screen (a screen that has been displayed most previously) in the screen history information. In addition, the rightmost square indicates screen state information concerning the newest screen (a screen that has been displayed most recently) in the screen history information. In addition, alphabetic characters A through E in the squares represent screen identifiers.

A square outlined by bold lines indicates that the screen state is a display state. In addition, squares outlined by thin lines indicate that the screen state is a non-display state. Further, a hatched square indicates that the screen state is a discarded state. FIG. 1 shows that the screen state of screen E is a display state, the screen states of screens B, C and D are non-display states, and the screen state of screen A is a discarded state.

Also, an example of the display data is schematically shown within the display data storage unit 105 in FIG. 1. Each square within the display data storage unit 105 represents a data area in which display data concerning a single screen is stored. Characters in the squares (D_{E}, etc.) each represent display data concerning a screen identified by a subscript alphabetic character. In the example shown in FIG. 1, display data concerning the screens E, B, C and D is stored in the display data storage unit 105.

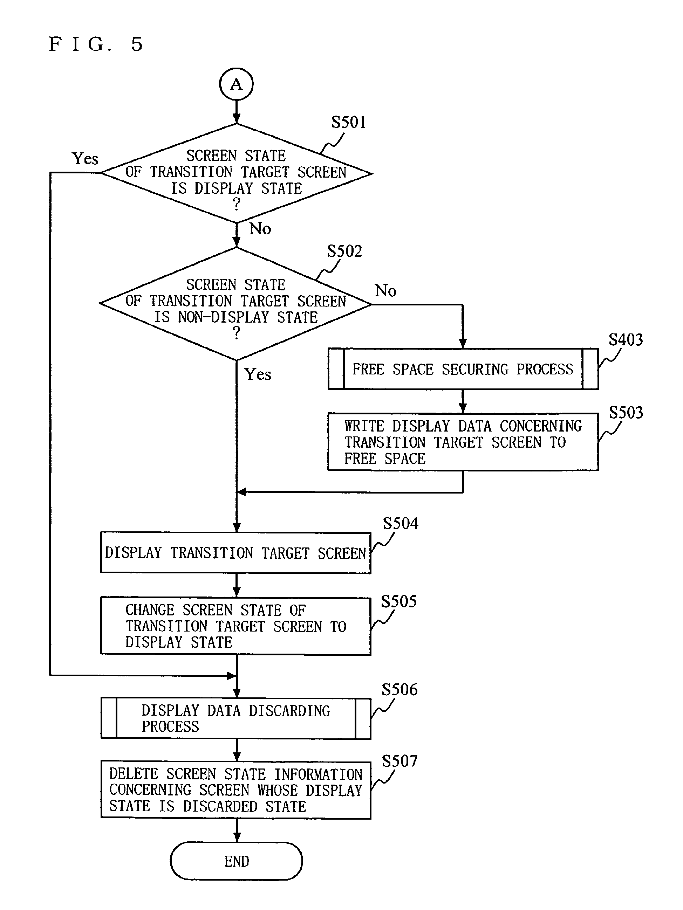

Described next are processes performed by the screen transition control device 102. FIG. 4 and FIG. 5 are flow charts illustrating a process performed by the screen transition control unit 103 when the application 101 requests the screen transition control unit 103 to perform screen transition (hereinafter, referred to as the "screen transition process").

When the application 101 requests the screen transition control unit 103 to perform screen transition, the screen transition control unit 103 first readsscreen historyinformation from the history information storage unit 104, and obtains the newest screen state information recorded in the screen history information. Then, the screen transition control unit 103 sets as a transition source screen a screen that is identified by a screen identifier contained in the screen state information (step S401).

Next, the screen transition control unit 103 determines whether the screen state information concerning a transition target screen requested by the application 101 is stored in the history information storage unit 104 (step S402).

If the screen state information concerning the transition target screen is not stored in the history information storage unit 104 (No in step S402), the screen transition control unit 103 executes a "free space securing process" (the details of which will be described later) in order to write display data concerning the transition target screen to the display data storage unit 105 (step S403).

After free space is secured in the display data storage unit 105 through the free space securing process, the screen transition control unit 103 writes the display data concerning the transition target screen to the free space in the display data storage unit 105 (step S404). Subsequently, the screen transition control unit 103 outputs the display data concerning the transition target screen stored in the display data storage unit 105 to the display device 106. The display device 106 displays the screen based on the display data (step S405).

Next, the screen transition control unit 103 adds screen state information (i.e., a screen identifier and a screen state) concerning the displayed screen to the screen history information (step S406). Since the transition target screen is being displayed, the screen state thereof is a display state. Subsequently, the screen transition control unit 103 changes the screen state of the transition source screen to a non-display state (step S407), and ends the screen transition process.

If the screen state information concerning the transition target screen requested by the application 101 is stored in the history information storage unit 104 (Yes in step S402), the screen transition control unit 103 determines whether the screen state of the transition target screen is a display state (step S501 in FIG. 5).

If the screen state of the transition target screen is a display state (Yes in step S501), the screen transition control unit 103 executes a display data discarding process (the details of which will be described later). If the screen state is not a display state (No in step S501), the screen transition control unit 103 determines whether the screen state of the transition target screen is a non-display state (step S502).

If the screen state of the transition target screen is a non-display state (Yes in step S502), the screen transition control unit 103 outputs display data concerning the transition target screen stored in the display data storage unit 105 to the display device 106. The display device 106 displays the screen based on the display data (step S504).

If the screen state of the transition target screen is not a non-display state (No in step S502), the transition target screen state is a discarded state. Accordingly, the screen transition control unit 103 executes a free space securing process in order to write the display data concerning the transition target screen to the display data storage unit 105 (step S403).

After free space is secured in the display data storage unit 105 through the free space securing process, the screen transition control unit 103 writes the display data concerning the transition target screen to the free space in the display data storage unit 105 (step S503). Subsequently, the screen transition control unit 103 outputs the display data concerning the transition target screen stored in the display data storage unit 105 to the display device 106. The display device 106 displays the screen based on the display data (step S504).

After the transition target screen is displayed on the displaydevice 106, the screen transition control unit 103changes the screen state of the transition target screen to a display state (step S505). Then, the screen transition control unit 103 executes a display data discarding process to discard display data concerning the transition source screen and any screen present between the transition source screen and the transition target screen (step S506). Lastly, the screen transition control unit 103 deletes from the history information storage unit 104 screen state information concerning any screen whose screen state is discarded state and that exists between the transition source screen and the transition target screen (step S507), and ends the screen transition process.

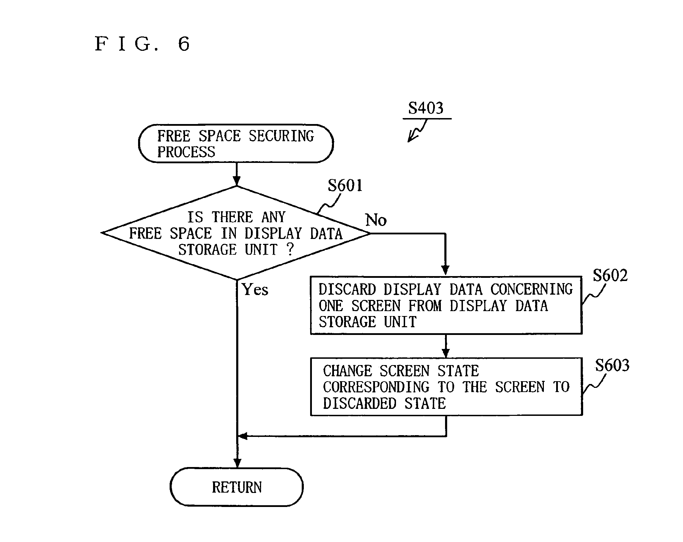

Next, the free space securing process is described with reference to the drawings. FIG. 6 is a flow chart of the free space securing process.

In the free space securingprocess, the screen transition control unit 103 first determines whether there is any free space in the display data storage unit 105 (step S601). If there is any free space (Yes in step S601), the screen transition control unit 103 ends the free space securing process. If there is no free space (No in step S601), the screen transition control unit 103 discards display data concerning one screen from the display data storage unit 105 (step S602). Then, the screen transition control unit 103 changes the screen state of the screen corresponding to the discarded display data to a discarded state (step S603), and ends the free space securing process.

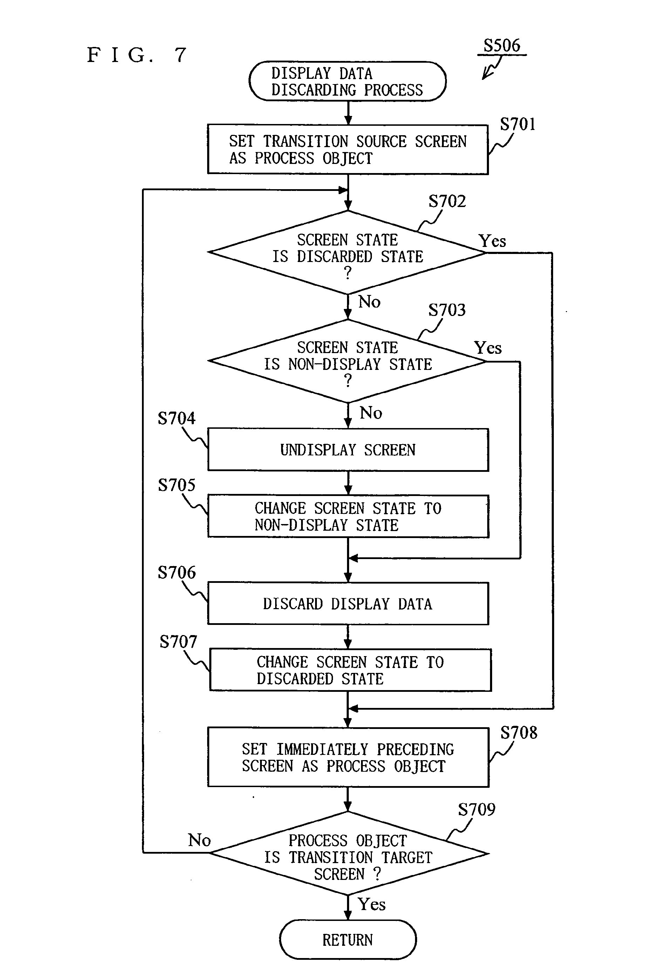

Next, the display data discarding process is described with reference to the drawings. FIG. 7 is a flow chart of the display data discarding process.

In the display data discarding process, the screen transition control unit 103 first sets a transition source screen as an object that is to be subjected to the display data discarding process (step S701). Then, the screen transition control unit 103 determines whether the screen state of the process object is a discarded state (step S702). If the screen state is a discarded state (Yes in step S702), the screen transition control unit 103 sets an immediately preceding screen in screen history information as a process object (step S708).

If the screen state of the process object is not a discarded state (No in step S702), the screen transition control unit 103 determines whether the screen state is a non-display state (step S703). If the screen state is a non-display state (Yes in step S703), the screen transition control unit 103 discards display data corresponding to the screen from the display data storage unit 105 (step S706).

If the screen state of the process target is not a non-display state (No in step S703), the screen state is a display state. Accordingly, the screen transition control unit 103 undisplays the screen (step S704), and further, changes the screen state to a non-display state (step S705). Subsequently, the screen transition control unit 103 discards display data corresponding to the screen from the display data storage unit 105 (step S706).

After discarding the display data concerning the process object from the display data storage unit 105, the screen transition control unit 103 changes the screen state to a discarded state (step S707). Further, the screen transition control unit 103 sets an immediately preceding screen in screen history information as a process object (step S708).

Thereafter, the screen transition control unit 103 determines whether the screen is a transition target screen (step S709). If the process object screen is a transition target screen (Yes in step S709), the screen transition control unit 103 ends the display data discarding process, and returns to the screen transition process. If the process object screen is not a transition target screen (No in step S709), the screen transition control unit 103 performs the processing in steps S702 through S708 with respect to the screen.

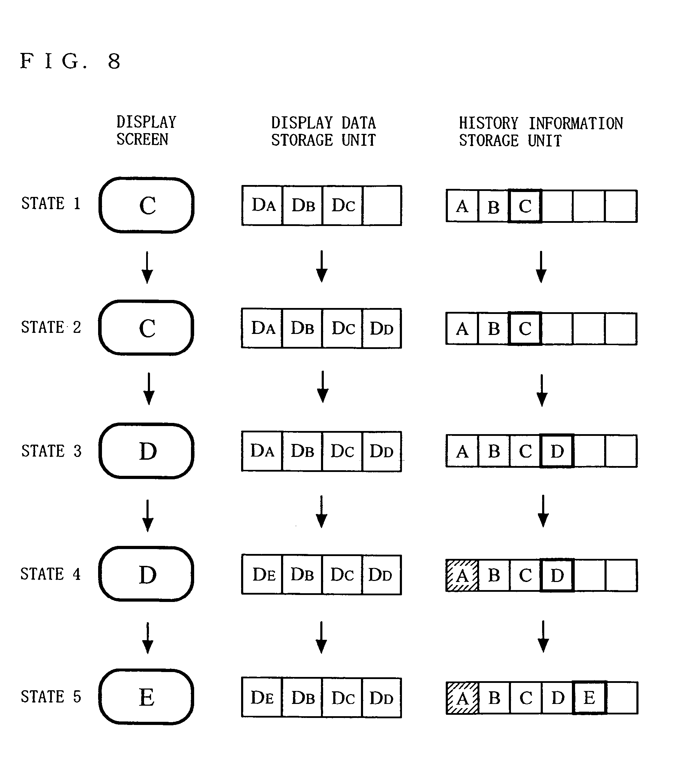

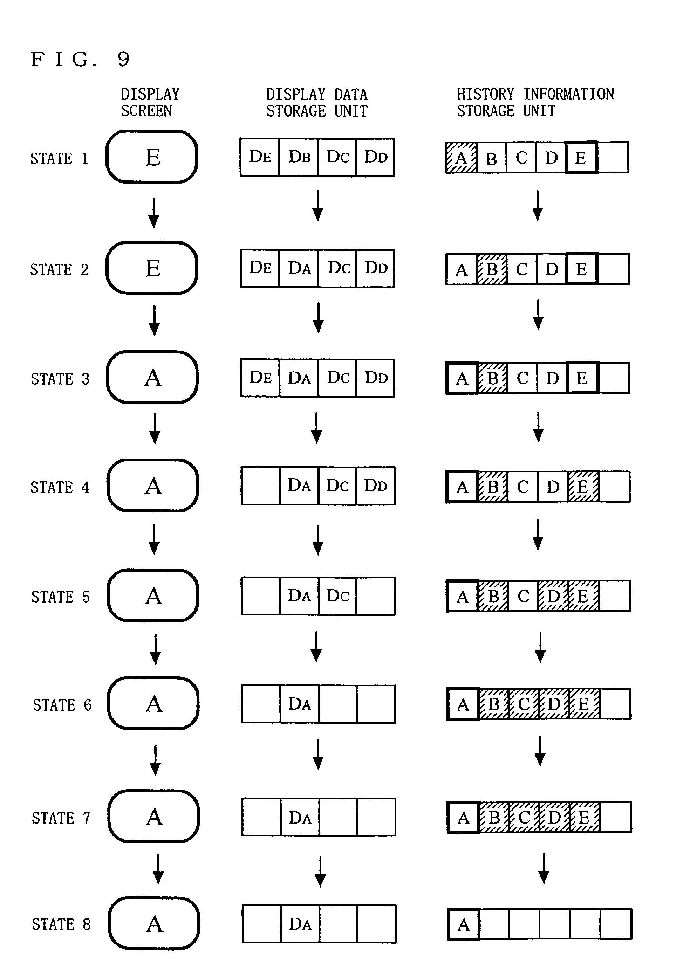

A concrete example of the screen transition process is describedbelow. FIG. 8andFIG. 9 are diagrams each illustrating how the contents of the display data stora.ge unit 105 and the history information storage unit 104 vary at the time of screen transition.

FIG. 8 is a diagram illustrating screen transitions to screens whose screen state information is not present in the history information storage unit 104. In FIG. 8, a screen transition from screen C to screen D and a screen transition from the screen D to screen E are shown by way of example.

In state 1 shown in FIG. 8, the screen C is displayed onadisplayscreen. Inaddition, the display data storage unit 105 has stored therein display data D_{A} concerning screen A, display data D_{B} concerning screen B and display data D_{C} concerning the screen C. Further, the history information storage unit 104 has stored therein screen state information concerning the screens A through C. The screen state of the screen C is a display state, and the screen states of the screens A and B are non-display states.

Described first is a process performed by the screen transition control unit 103 in the screen transition from the screen C to the screen D.

When the application 101 requests the screen transition to the screen D, the screen transition control unit 103 first sets the screen C as a screen transition source (step S401 in FIG. 4). Next, the screen transition control unit 103determinesthatscreen state information concerning the screen D, which is a transition target screen, is not present in the history information storage unit 104 (No in step S402).

Since the display data storage unit 105 has free space (Yes in step S601 in FIG. 6), the screen transition control unit 103 writes display data D_{D} concerning the screen D to the free space (step S404). At this time, the screen C is being displayed on the display screen (see state 2 in FIG. 8).

Subsequently, the screen transition control unit 103 outputs the display data D_{D} concerning the screen D to the display device 106. The display device 106 displays the screen D based on the display data (step S405). Then, the screen transition control unit 103 adds screen state information concerning the screen D to the screen history information (step S406). Lastly, the screen transition control unit 103 sets the screen state of the screen D to a display state, and changes the screen state of the screen C to a non-display state (step S407; see state 3 in FIG. 8).

Next, the screen transition from the screen D to the screen E is described as an example where the display data storage unit 105 has no free space.

First, the screen transition control unit 103 sets the screen D as a screen transition source (step S401). Then, the screen transition control unit 103 determines that screen state information concerning the screen E, which is a transition target screen, is not present in the history information storage unit 104 (No in step S402). Further, the screen transition control unit 103 determines in the free space securing process that the display data storage unit 105 has no free space (No in step S601). Accordingly, the screen transition control unit 103 secures free space for writing display data D_{E} concerning the screen E in the display data storage unit 105.

In this example, it is assumed that the screen transition control unit 103 discards display data concerning the screen A. In the free space securing process, the screen transition control unit 103 discards the display data concerning the screen A (step S602), and further, changes the screen state of the screen A to a discarded state (step S603). Subsequently, the screen transition control unit 103 writes the display data D_{E} concerning the screen E to the free space (an area where the display data D_{A} concerning the screen A was present) (step S404). Note that at this time, the screen D is being displayed on the display screen (see state 4 in FIG. 8).

Subsequently, the screen transition control unit 103 outputs the display data D_{E} concerning the screen E to the display device 106. The display device 106 displays the screen E on the display screen based on the display data (step S405). Then, the screen transition control unit 103 adds screen state information concerning the screen E to the screen history information (step S406). Lastly, the screen transition control unit 103 sets the screen state of the screen E to a display state, and changes the screen state of the screen D to a non-display state (step S407; see state 5 in FIG. 8).

Next, referring to FIG. 9, a screen transition from screen E to screen A is described as an example of transition to a screen whose screen state information is present in the history information storage unit 104.

In state 1 shown in FIG. 9, the screen E is being displayed on the display screen. In addition, the display data storage unit 105 has stored therein display data D_{B} concerning screen B, display data D_{C} concerning screen C, display data D_{D} concerning screen D and display data D_{E} concerning the screen E. Further, the history information storage unit 104 has stored therein screen state information concerning the screens A through E. The screen state of the screen A is a discarded state, the screen states of the screens B, C and D are non-display states, and the screen state of the screen E is a display state.

When the application 101 requests the screen transition to the screen A, the screen transition control unit 103 first sets the screen E as a screen transition source (step S401). Then, the screen transition control unit 103determinesthatscreenstate information concerning the screen A, which is a transition target screen, is present in the history information storage unit 104 (Yes in step S402).

Next, the screen transition control unit 103 determines that the screen state information concerning the screen A, which is a transition target screen, is a discarded state (No in step S502 in FIG. 5). Further, the screen transition control unit 103 determines in the free space securing process that the display data storage unit 105 has no free space (No in step S601). Accordingly, the screen transition control unit 103 secures free space for writing display data D_{A} concerning the screen A in the display data storage unit 105.

In this example, it is assumed that the screen transition controlunit 103 discards the display data concerning the screen B. In the free space securing process, the screen transition control unit 103 discards the display data concerning the screen B (step S602), and further, changes screen information concerning the screen B to a discarded state (step S603). Subsequently, the screen transition control unit 103 writes the display data D_{A} concerning the screen A to the free space (an area where the display data D_{B} concerning the screen B was present) (step S503). Note that at this time, the screen E is being displayed on the display screen (see state 2 in FIG. 9).

Next, the screen transition control unit 103 outputs the display data D_{A} concerning the screen A to the display device 106. The display device 106 displays the screen A on the display screen based on the display data (step S504). Further, the screen transition control unit 103 changes the screen state of the screen A to a display state (step S505; see state 3 in FIG. 9).

Next, the screen transition control unit 103 executes a display data discarding process (step S506). In the display data discarding process, the screen transition control unit 103 first sets the screen E, which is a transition source screen, as a process object (step S701 in FIG. 7).

The screen transition control unit 103 determines that the screen state of the screen E is a display state (No in step S703). Accordingly, the screen transition control unit 103 undisplays the screen E (step S704), and further, changes the screen state of the screen E to a non-display state (step S705). Subsequently, the screen transition control unit 103 discards the display data D_{E} concerning the screen E (step S706), and further, changes the screen state of the screen E to a discarded state (step S707; see state 4 in FIG. 9).

Next, the screen transition control unit 103 sets the screen D as a process object (step S708). Since the screen D is not a transition target screen (No in step S709), the screen transition control unit 103 performs the processing in steps S702 through S707 with respect to the screen D. Since the screen state of the screen D is a non-display state (Yes in step S703), the screen transition control unit 103 discards the display data D_{D} concerning the screen D (step S706), and further, changes the screen state of the screen D to a discarded state (step S707; see state 5 in FIG. 9).

Next, the screen transition control unit 103 sets the screen C as a process object (step S709). Since the screen C is not a transition target screen (No in step S709), the screen transition control unit 103 performs the processing in steps S702 through S707 with respect to the screen C. Since the screen state of the screen C is a non-display state, the same processing as that for the screen D is performed with respect to the screen C (see state 6 in FIG. 9).

Next, the screen transition control unit 103 sets the screen B as a process object (step S708). Since the screen B is not a transition target screen (No in step S709), the screen transition control unit 103 performs the processing in steps S702 through S707 with respect to the screen B. Since the screen state of the screen B is a discarded state (Yes in step S702), the discarding of display data is not performed (see state 7 in FIG. 9).

Next, the screen transition control unit 103 sets the screen A as a process object (step S708). Since the screen A is a transition target screen (Yes in step S709), the screen transition control unit 103 ends the display data discarding process.

Lastly, the screen transition control unit 103 deletes the screen state information concerning the screens B through E (step S507), and ends the screen transition process (see state 8 in FIG. 9).

As such, the screen transition control device according to the present embodiment is capable of, even when display data is discarded for reason of memory capacity, holding a screen history by storing, as a discarded state, the screen state of a screen whose display data has been discarded to the history information storage unit. This allows even cell phones and hand-held information terminals, which have a small memory capacity, to record to a history more screens than are conventionally recorded, whereby it is possible to implement high-speed screen transition.

Note that the screen transition control device according to the present embodiment has been described as using three screen states, i.e., a display state, a non-display state and a discarded state, but the screen states are not limited to the three. Other screen states may be used, e. g. , an initial state, which represents a state where a screen has not been subjected to any process, an active state, which represents a state of being an operation object of the user, and an inactive state, which represents a state of not being an operation object of the user.

In addition, the screen transition control device according to the present embodiment has been described as using as a screen state a combination of the "presence/absence of display data" and the "display/non-display of screen" as shown in FIG. 2, but the "presence/absence of display data" and the "display/non-display of screen" may be individually used as screen states.

In addition, the screen transition control device according to the present embodiment has been described as performing screen displaying, undisplaying and discarding processes with respect to all screens, but it is not necessary to perform these three processes with respect to all screens. The screen transition control device according to the present embodiment may be configured in such a manner as to enable the settings that allow these processes to be performed only with respect to some screens and not with respect to other screens.

In addition, the screen transition is not limited to switching to a screen on which a different process is performed in a normal application. In the case of holding, as a history, processing results of a browser or a database search system, it is also possible to use the screen transition control device according to the present embodiment by considering screens corresponding to the history as a single screen.

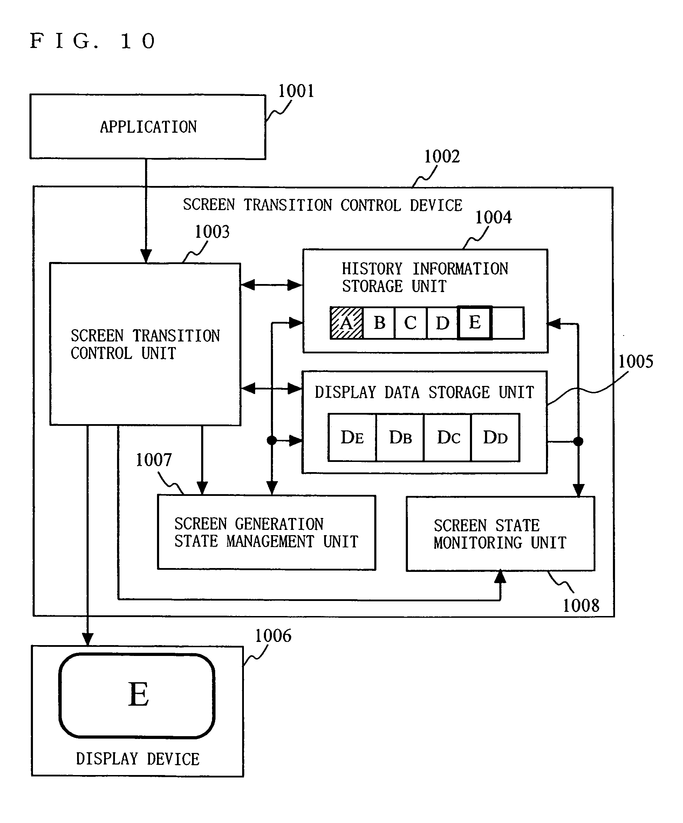

FIG. 10 is a block diagram illustrating a configuration of a screen transition control device according to a second embodiment of the present invention. The screen transition control device 1002 according to the present embodiment includes a screen transition control unit 1003, a history information storage unit 1004, a display data storage unit 1005, a screen generationstatemanagementunit 1007 and a screen state monitoring unit 1008.

In addition to functions as described in the first embodiment, the screen transition control unit 1003 is further provided with a function of notifying screen transition to the screen generation state management unit 1007 when a screen transition process ends.

Upon notification of the screen transition from the screen transition control unit 1003, the screen generation state management unit 1007 refers to screen history information stored in the history information storage unit 1004 tomanage screen state information contained in the screen history information.

Concretely, the screen generation state management unit 1007 reads the screen history information from the history information storage unit 1004, and obtains up to a predetermined number of pieces of screen state information (hereinafter, the N-th piece) from the newest screen state information recorded in the screen history information. Then, the screen generation state management unit 1007 writes to the display data storage unit 1005 display data concerning any screen, which is identified by a screen identifier contained in the pieces of screen state information and whose screen state is a discarded state, and changes the screen state from the discarded state to a non-display state. In addition, the screen generation state management unit 1007 discards display data concerning any screen whose screen state is a display state or a non-display state within the range from the (N+1) -th screen state information to the oldest screen state information, and sets the screen state to a discarded state (hereinafter, these processes are referred to as the "screen generation state management process"). As a result, display data concerning any screens that are highly likely to transition immediately is prepared in the display data storage unit 1005, and therefore it is possible to implement high-speed screen transition to the screens.

The screen state monitoring unit 1008 monitors screen state information concerning screens stored in the history information storage unit 1004. Concretely, the screen state monitoring unit 1008 obtains screen states from the screen state information concerning the screens, and compares them to the current states of the screens. If there is any difference between the screen states and the current states of the screens, the screen state monitoring unit 1008 changes the screen states so as to agree with the current states of the screens. A process performed by the screen state monitoring unit 1008 for checking the state of each screen may be regularly performed at predetermined time intervals or it may be performed by, when the screen state has been changed, notifying such change from the screen to the screen state monitoring unit 1008 or by notifying the screen state from a module such as a window system offering a screen display function. As a result, it is possible to prevent the states of the screens from disagreeing with the screen states stored in the history information storage unit 1004, and therefore it is possible to eliminate any inconvenience caused in the case where a screen state has been changed but not by a screen transition request from an application as in when switching between display devices, or in the case where the screen state has been changed by influence of another screen that is not managed by the screen transition control device.

Described next is the processing performed by the screen transition control device 1002. The description of the screen transition process performed by the screen transition control unit 1003 is given in the first embodiment, and therefore omitted herein. When the screen transition process ends, the screen transition control unit 1003 notifies the screen generation state management unit 1007 of screen transition. Upon receipt of the notification, the screen generation state management unit 1007 starts a screen generation state management process. The screen generation state management process is described below with reference to the drawings.

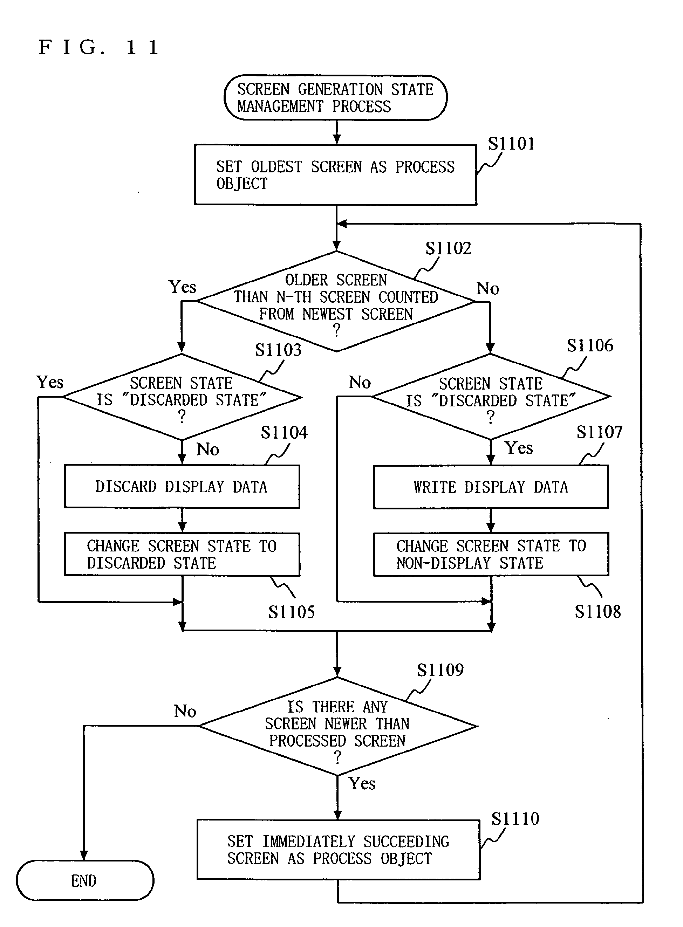

FIG. 11 is a flow chart illustrating the screen generation state management process. Upon notification of screen transition from the screen transition control unit 1003, the screen generation state management unit 1007 first reads screen history information from the history information storage unit 1004, and obtains the oldest piece of screen state information recorded in the screen history information. Then, the screen generation state management unit 1007 sets a screen identified by a screen identifier contained in the screen state information as an object on which the screen generation state management process is performed (step S1101).

Next, the screen generation state management unit 1007 determines whether the process object screen is a screen that is older than an N-th screen counted from the newest screen (a screen havingbeendisplayedbeforetheN-thscreen) (step S1102). Here, "N" is a value (an integer) held by the screen generation state management unit 1007, which indicates as to which numbered screen is the screen to which the newest screen frequently transitions. Note that this value may be set at the time of system designing or it may be set by allowing the system to learn the screen number to which frequent return is made based on observation of the user's operation.

If the process object screen is a screen that is older than the N-th screen counted from the newest screen (Yes in step S1102), the screen generation state management unit 1007 determines whether the screen state of the screen is a discarded state (step S1103). If the screen state is a discarded state (Yes in step S1103), the screen generation state management unit 1007 determines whether there is any screen newer than this screen (step S1109).

If the screen state is not a discarded state (No in step S1103), the screen generation state management unit 1007 discards display data concerning the process object screen from the display data storage unit 1005 (step S1104). Further, the screen generation state management unit 1007 changes the screen state to a discarded state (step S1105). Subsequently, the screen generation state management unit 1007 determines whether there is any screen newer than this screen (step S1109).

If the process object screen is not a screen older than the N-th screen (No in step S1102), the screen generation state management unit 1007 determines whether the screen state of the screen is a discarded state (step S1106). If the screen state is not a discarded state (No in step S1106), the screen generation state management unit 1007 determines whether there is any screen newer than this screen (step S1109).

If the screen state is a discarded state (Yes in step S1106), the screen generation state management unit 1007 writes display data concerning the process object screen to the display data storage unit 1005 (step S1107). Further, the screen generation state management unit 1007 changes the screen state to a non-display state (step S1108). Subsequently, the screen generation state management unit 1007 determines whether there is any screen newer than this screen (step S1109).

If there is any screen newer than the screen subjected to the screen generation state management process (Yes in step S1109), the screen generation statemanagement unit 1007 sets an immediately succeeding screen in the screen history information as a process object (step S1110). The screen generation state management unit 1007 performs the processing in steps S1102 through S1109 with respect to the new process object screen.

If there is no screen newer than the screen subjected to the screen generation state management process (No in step S1109), the screen generation statemanagement unit 1007 ends the screen generation state management process.

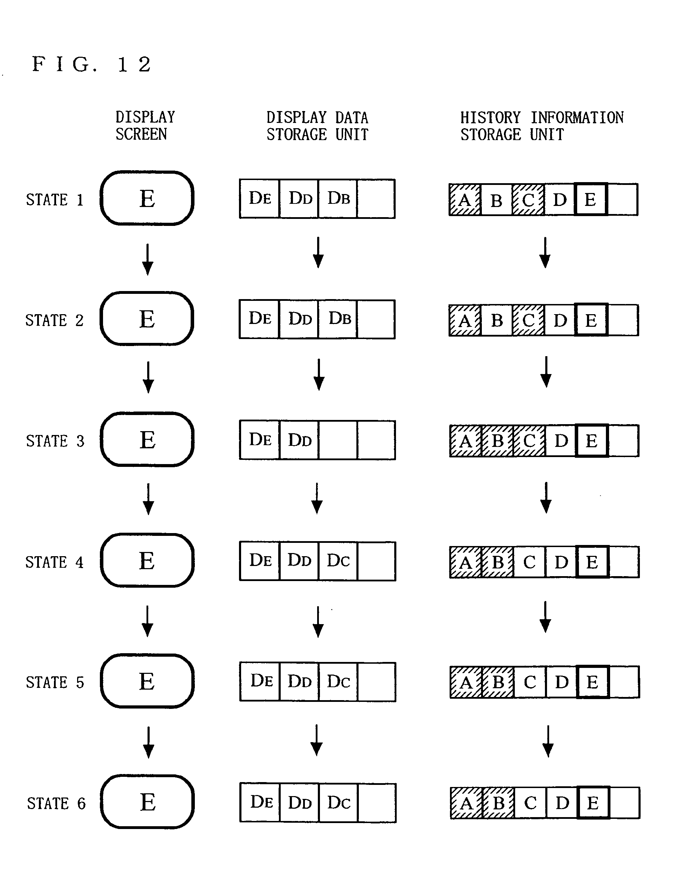

Described below is a concrete example of the screen generation state management process. FIG. 12 is a diagram illustrating how the contents of the display data storage unit 1005 and the history information storage unit 1004 vary during the screen generation state management process.

Now, consider a case where, when a screen transition process ends, screen E is being displayed on a display device 1006 and the display data storage unit 1005 has stored therein display data D_{B} concerning screen B, display data D_{D} concerning screen D and display data D_{E} concerning the screen E. Further, it is assumed that the screen states of screens A and C are discarded states, the screen states of the screens B and D are non-display states, and the screen state of the screen E is a display state. This situation is shown in state 1 in FIG. 12. In addition, the screen generation state management unit 1007 is assumed to hold "3" as a value for N.

Upon notification of completion of the screen transition process from the screen transition control unit 1003, the screen generation state management unit 1007 first sets the screen A as an object that is to be subjected to the screen generation state management process (step S1101 in FIG. 11). Then, the screen generation state management unit 1007 determines that the screen A is a screen older than the third screen counted from the screen E (Yes in step S1102). Further, the screen generation state management unit 1007 determines that screen information concerning the screen A is a discarded state (Yes in step S1103; see state 2 in FIG. 12).

Subsequently, the screen generation state management unit 1007 determines that there is screen state information concerning a screen newer than the screen A (Yes in step S1109), and sets the screen B as a process object (step S1110).

The screen generation state management unit 1007 determines that the screen B is a screen older than the third screen counted from the screen E (Yes in step S1102) . Then, the screen generation state management unit 1007 determines that screen information concerning the screen B is not a discarded state (No in step S1103). Accordingly, the screen generation state management unit 1007 discards the display data concerning the screen B from the display data storage unit 1005 (step S1104). Further, the screen generation state management unit 1007 changes the screen state of the screen B to a discarded state (step S1105; see state 3 in FIG. 12).

Subsequently, the screen generation state management unit 1007 determines that there is screen state information concerning a screen newer than the screen B (Yes in step S1109), and sets the screen C as a process object (step S1110).

The screen generation state management unit 1007 determines that the screen C is not a screen older than the third screen counted from the screen E (No in step S1102). Further, the screen generation state management unit 1007 determines that screen information concerning the screen B is a discarded state (Yes in step S1106). Accordingly, the screen generation state management unit 1007 writes display data concerning the screen C to the display data storage unit 1005 (step S1107). Further, the screen generation state management unit 1007 changes the screen state of the screen C to a non-display state (step S1108; see state 4 in FIG. 12).

Subsequently, the screen generation state management unit 1007 determines that there is screen state information concerning a screen newer than the screen C (Yes in step S1109), and sets the screen D as a process object (step S1110).

The screen generation state management unit 1007 determines that the screen D is not a screen older than the third screen counted from the screen E (No in step S1102). Then, the screen generation state management unit 1007 determines that screen information concerning the screen D is not a discarded state (No in step S1106; see state 5 in FIG. 12).

Subsequently, the screen generation state management unit 1007 determines that there is screen state information concerning a screen newer than the screen D (Yes in step S1109), and sets the screen E as a process object (step S1110).

The screen generation state management unit 1007 determines that the screen E is not a screen older than the third screen counted from the screen E (No in step S1102). Then, the screen generation state management unit 1007 determines that screen information concerning the screen E is not a discarded state (No in step S1106; see state 6 in FIG. 12).

Subsequently, the screen generation state management unit 1007 determines that there is no screen state information concerning a screen newer than the screen E (No in step S1109), and ends the screen generation state management process.

As such, the screen transition control device according to the present embodiment writes to the display data storage unit display data concerning up to a predetermined number of screens from the newest screen. As a result, display data concerning any screens that are highly likely to transition immediately is prepared in the display data storage unit, and therefore it is possible to implement high-speed screen transition to the screens. In addition, the screen transition control device according to the present embodiment discards display data concerning any old screen that is not likely to transition. Thus, it is possible to reduce the amount of memory required for storing display data.

Note that the screen transition control device according to the present embodiment has been described as executing the screen generation state management process immediately after completion of the screen transition process, but the screen generation state management process may be executed at the time of being brought into a state where the CPU activity ratio is low or a state where the system is idling. In addition, the screen generation state management process does not always have to be executed upon each completion of screen transition, and the process may not be executed, for example, in the case where the CPU activity ratio is high or the system is not brought into idling state. In addition, in order to prevent processing speeds of the screen transition process and other processes from being reduced due to the screen generation state management process, programs for performing the screen transition process and the screen generation state management process are individually provided, so that the processing is performed by switching between these programs.

Next, a third embodiment of the present invention is described with reference to the drawings. The configuration of a screen transition control device according to the present embodiment is the same as that of the screen transition control device according to the first embodiment, and therefore the description thereof is omitted herein.

A feature of the screen transition control device according to the present embodiment resides in that, in the case where a screen is changed when a background screen or the like is downloaded through the Internet or the like, or in the case where system language settings are changed in real-time, the screen transition control unit 103 shown in FIG. 1 updates display data in the display data storage unit 105 while holding screen history information in the history information storage unit 104 (hereinafter, this process is referred to as the "screen replacement process").

Described next is the processing performed by the screen transition control device according to the present embodiment. When the application 101 requests screen replacement, the screen transition control unit 103 starts a screen replacement process. The screen replacement process is described below with reference to the drawings.

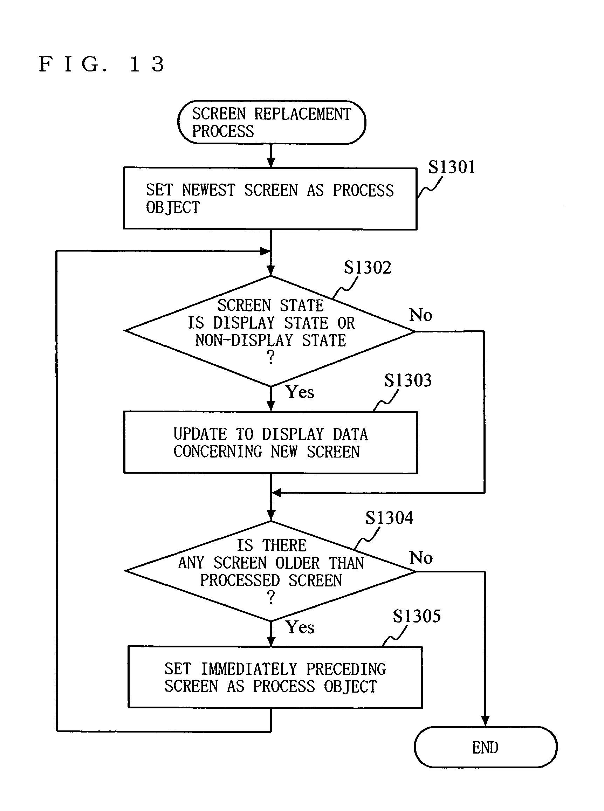

FIG. 13 is a flow chart illustrating the screen replacement process. When the application 101 requests screen replacement, the screen transition control unit 103 first reads screen history information from the history information storage unit 1004, and obtains the newest screen state information recorded in the screen history information. Then, the screen transition control unit 103 sets a screen identified by a screen identifier contained in the screen state information as an object screen that is to be subjected to the screen replacement process (step S1301).

Next, the screen transition control unit 103 determines whether the screen state is a display state or a non-display state (step S1302). If the screen state of the screen is a display state or a non-display state (Yes in step S1302), the screen transition control unit 103 updates display data stored in the display data storage unit 105 to display data concerning a replacement screen (hereinafter, referred to as the "new screen") (step S1303). Subsequently, the screen transition control unit 103 determines whether there is any screen older than this screen (step S1304) .

If it is determined that the screen state of the process object screen is not a screen in a display state or a non-display state screen (No in step S1302), the screen transition control unit 103 determines whether there is any screen older than this screen (step S1304).

If there is any screen older than the processed screen (Yes in step S1304), the screen transition control unit 103 sets an immediately preceding screen in the screen history information as a process object (step S1305), and performs the processing in steps S 1302 through S1304 with respect to the set screen. If there is no screen older than this screen (No in step S1304), the screen transition control unit 103 ends the screen replacement process.

Described below is a concrete example of the screen replacement process. FIG. 14 is a diagram illustrating how the contents of the display data storage unit 105 and the history information storage unit 104 vary during the screen replacement process.

In state 1 shown in FIG. 14, screen C is being displayed on the display screen. In addition, the display data storage unit 105 has stored therein display data D_{B} concerning screen B and display data D_{C} concerning screen C. Further, the screen state of screen A is a discarded state, the screen state of the screen B is a non-display state, and the screen state of the screen C is a display state.

When the application 101 requests screen replacement, the screen transition control unit 103 firsts sets the screen C as a screen that is to be subj ected to the screen replacement process (step S1301 in FIG. 13). Then, the screen transition control unit 103 determines that the screen C is in a display state (Yes in step S1302). Accordingly, the screen transition control unit 103 updates the display data concerning the screen C to display data D_{C}, concerning a new screen. Further, the screen transition control unit 103 outputs the display data D_{C'} to the display device 106. The display device 106 displays the screen C' on the display screen based on the display data (see state 2 in FIG. 14) .

Subsequently, the screen transition control unit 103 determines that there is a screen older than the screen C (Yes in step S1304), and sets the screen B as a process object (step S1305).

The screen transition control unit 103 determines that the screen state of the screen B is a non-display state (Yes in step 1302). Accordingly, the screen transition control unit 103 updates the display data concerning the screen B to display data D_{B}, concerning a new screen (see state 3 in FIG. 14).

Subsequently, the screen transition control unit 103 determines that there is a screen older than the screen B (Yes in step S1304), and sets the screen A as a process object (step S1305).

The screen transition control unit 103 determines that the screen state of the screen A is neither a display state nor a non-display state (No in step 1302). Subsequently, the screen transition control unit 103 determines that there is no screen older than the screen A (No in step S1304), and ends the screen replacement process (see state 4 in FIG. 14).

As such, the screen transition control device according to the present embodiment is capable of holding screen history even when it is necessary to make replacement of screen display data, e. g. , when a screen has been changed after a background screen or the like is downloaded through the Internet or the like, or when system language settings are changed in real-time.

Note that the configuration of the screen transition control device according to the present embodiment has been described as being the same as that of the screen transition control device according to the first embodiment, but it may be the same as the configuration of the screen transition control device according to the second embodiment.

In addition, each embodiment of the present invention has been described with respect to the case where one screen is displayed, but a plurality of screens may be simultaneously displayed. In such a case, a step for simultaneously displaying the plurality of screens is added to the flow chart of each process.

In addition, each process performed by a screen transition control device of the present invention may be realized by a computer program. In addition, such a computer program may be distributed in the form of a storage medium having it stored therein, which is typified by a CD-ROM, or may be provided to cell phones, hand-held information terminals and so on through a network such as the Internet.

### INDUSTRIAL APPLICABILITY

A screen transition control device of the present invention makes it possible to increase the number of screens that are to be recorded in a history, implement high-speed screen transition, and hold a screen history even when screen replacement is required, and therefore it can be used for, in addition to cell phones, hand-held information terminals and so on, household appliances, information processing apparatuses and industrial instruments, which require the screen transition process.

## Claims

1. A screen transition control device for switching between screens that are to be displayed on an externally provided display device in accordance with an external request, comprising:
a display data storage unit for storing display data concerning a plurality of screens;
a history information storage unit for storing, as history information, information concerning a screen having been displayed before; and
a screen transition control unit for outputting display data concerning one or more screens to the display device and managing the history information, the one or more screens being selected from among the display data stored in the display data storage unit,
wherein the history information includes information associated with a previously displayed screen whose display data is currently not stored in the display data storage unit.

2. The screen transition control device according to claim 1, wherein the history information includes first information indicating whether display data concerning the screen having been displayed before is stored in the display data storage unit and second information indicating whether the screen is currently being displayed on the display device.

3. The screen transition control device according to claim 2, wherein when a data area for writing display data concerning a transition target screen is absent in the display data storage unit at the time of screen transition, the screen transition control unit discards display data concerning a single screen from the display data storage unit.

4. The screen transition control device according to claim 3, wherein when display data concerning a screen recorded in the history information as having been previously displayed is discarded, the screen transition control unit updates the first information included in information concerning the screen without deleting the information concerning the screen from the history information.

5. The screen transition control device according to claim 1, further comprising a screen generation state management unit for, when there is a screen that is recorded in the history information as having been displayed after a screen corresponding to a predetermined number counted from a newest screen has been displayed and whose display data is not stored in the display data storage unit, writing the display data concerning the screen to the display data storage unit.

6. The screen transition control device according to claim 1, further comprising a screen generation state management unit for, when there is a screen that is recorded in the history information as having been displayed before a screen corresponding to a predetermined number counted from a newest screen has been displayed and whose display data is stored in the display data storage unit, discarding display data concerning the screen from the display data storage unit.

7. The screen transition control device according to claim 2, further comprising a screen state monitoring unit for, when the first information or the second information disagrees with a state of the screen having been displayed before, causing the first information or the second information to agree with the state of the screen.

8. The screen transition control device according to claim 1, wherein the screen transition control unit, when externally requested for screen replacement, updates the display data stored in the display data storage unit while holding the history information.

9. A screen transition control method for switching between screens that are to be displayed on an externally provided display device in accordance with an external request, comprising:
a display data storing step for storing display data concerning a plurality of screens;
a history information storing step for storing, as history information, information concerning a screen having been displayed before; and
a screen transition control step for outputting display data concerning one or more screens to the display device and managing the history information, the one or more screens being selected from among the display data stored in the display data storing step,
wherein the history information includes information associated with a previously displayed screen whose display data is currently not stored.

10. A program for executing in a computer a screen transition control method for switching between screens that are to be displayed on an externally provided display device in accordance with an external request, comprising:
a display data storing step for storing display data concerning a plurality of screens;
a history information storing step for storing, as history information, information concerning a screen having been displayed before; and
a screen transition control step for outputting display data concerning one or more screens to the display device and managing the history information, the one or more screens being selected from among the display data stored in the display data storing step,
wherein the history information includes information associated with a previously displayed screen whose display data is currently not stored.

11. A storage medium having stored therein a program for executing in a computer a screen transition control method for switching between screens that are to be displayed on an externally provided display device in accordance with an external request, comprising:
a display data storing step for storing display data concerning a plurality of screens;
a history information storing step for storing, as history information, information concerning a screen having been displayed before; and
a screen transition control step for outputting display data concerning one or more screens to the display device and managing the history information, the one or more screens being selected from among the display data stored in the display data storing step,
wherein the history information includes information associated with a previously displayed screen whose display data is currently not stored.

## Amended claims

### Amended claims under Art. 19.1 PCT

**1.** (amended) A screen transition control device for switching between screens that are to be displayed on an externally provided display device in accordance with an external request, comprising:
a display data storage unit for storing display data concerning a plurality of screens;
a history information storage unit for storing, as history information, a screen transition order from a screen having been displayed before to a screen that is currently being displayed; and
a screen transition control unit for outputting display data concerning one or more screens to the display device and managing the history information, the one or more screens being selected from among the display data stored in the display data storage unit,
wherein the history information includes information associated with a previously displayed screen whose display data is currently not stored in the display data storage unit.

**2.** The screen transition control device according to claim 1, wherein the history information includes first information indicating whether display data concerning the screen having been displayed before is stored in the display data storage unit and second information indicating whether the screen is currently being displayed on the display device.

**3.** The screen transition control device according to claim 2, wherein when a data area for writing display data concerning a transition target screen is absent in the display data storage unit at the time of screen transition, the screen transition control unit discards display data concerning a single screen from the display data storage unit.

**4.** The screen transition control device according to claim 3, wherein when display data concerning a screen recorded in the history information as having been previously displayed is discarded, the screen transition control unit updates the first information included in information concerning the screen without deleting the information concerning the screen from the history information.

**5.** The screen transition control device according to claim 1, further comprising a screen generation state management unit for, when there is a screen that is recorded in the history information as having been displayed after a screen corresponding to a predetermined number counted from a newest screen has been displayed and whose display data is not stored in the display data storage unit, writing the display data concerning the screen to the display data storage unit.

**6.** The screen transition control device according to claim 1, further comprising a screen generation state management unit for, when there is a screen that is recorded in the history information as having been displayed before a screen corresponding to a predetermined number counted from a newest screen has been displayed and whose display data is stored in the display data storage unit, discarding display data concerning the screen from the display data storage unit.

**7.** The screen transition control device according to claim 2, further comprising a screen state monitoring unit for, when the first information or the second information disagrees with a state of the screen having been displayed before, causing the first information or the second information to agree with the state of the screen.

**8.** (amended) The screen transition control device according to claim 1, wherein the screen transition control unit, when externally requested to change display details of each screen, updates the display data stored in the display data storage unit while holding the history information.

**9.** A screen transition control method for switching between screens that are to be displayed on an externally provided display device in accordance with an external request, comprising:
a display data storing step for storing display data concerning a plurality of screens;
a history information storing step for storing, as history information, information concerning a screen having been displayed before; and
a screen transition control step for outputting display data concerning one or more screens to the display device and managing the history information, the one or more screens being selected from among the display data stored in the display data storing step,
wherein the history information includes information associated with a previously displayed screen whose display data is currently not stored.

**10.** A program for executing in a computer a screen transition control method for switching between screens that are to be displayed on an externally provided display device in accordance with an external request, comprising:
a display data storing step for storing display data concerning a plurality of screens;
a history information storing step for storing, as history information, information concerning a screen having been displayed before; and
a screen transition control step for outputting display data concerning one or more screens to the display device and managing the history information, the one or more screens being selected from among the display data stored in the display data storing step,
wherein the history information includes information associated with a previously displayed screen whose display data is currently not stored.

**11.** A storage medium having stored therein a program for executing in a computer a screen transition control method for switching between screens that are to be displayed on an externally provided display device in accordance with an external request, comprising:
a display data storing step for storing display data concerning a plurality of screens;
a history information storing step for storing, as history information, information concerning a screen having been displayed before; and
a screen transition control step for outputting display data concerning one or more screens to the display device and managing the history information, the one or more screens being selected from among the display data stored in the display data storing step,
wherein the history information includes information associated with a previously displayed screen whose display data is currently not stored.
